# EUROPÄISCHE PATENTANMELDUNG

(11) **EP 2 743 459 A1**
(43) Veröffentlichungstag der Anmeldung: **18.06.2014**
(21) Anmeldenummer: 12196461.3
(22) Anmeldetag: 11.12.2012
(51) Int. Cl.: F01D 9/06, F01D 11/00, F01D 25/16

(54) **Strömungsmaschine**

(71) Anmelder: MTU Aero Engines AG, 80995 München (DE)
(72) Erfinder: Pirker, Klaus, St. Lambert, QC, J4R2V3 (CA)

(57) **Zusammenfassung**

Offenbart ist eine Strömungsmaschine mit einem Turbinenzwischengehäuse(1), wobei ein zwischen dem Turbinenzwischengehäuse und einem Niederdruckturbinengehäuse (2) gebildeter Ringraum mittels zumindest zwei Dichtringen (14,16) abgedichtet ist, wobei sich der eine Dichtring (16) in Anlage mit dem Turbinenzwischengehäuse befindet und sich der andere Dichtring (14) in Anlage mit dem Niederdruckturbinengehäuse befindet und dabei eine radiale Ringüberlappung (18) mit dem erstgenannten Dichtring bildet.

## Beschreibung

Die Erfindung betrifft eine Strömungsmaschine nach dem Oberbegriff des Patentanspruchs 1.

Eine Strömungsmaschine, beispielsweise ein Flugtriebwerk oder eine stationäre Gasturbine, hat gewöhnlich ein Turbinenzwischengehäuse 1 (mid turbine frame bzw. mid turbine vane frame) zum Führen eines Heißgasstromes von einer Hochdruckturbine zu einer Niederdruckturbine. Wie beispielsweise in der EP 2 192 276 A2 gezeigt, begrenzt das Turbinenzwischengehäuse mit einem Niederdruckturbinengehäuseabschnitt einen Ringraum, der mit einem Kühlluftsystem verbunden ist. Um zu verhindern, dass ein Kühlluftstrom aus dem Ringraum in den Heißgaspfad einströmt, ist der Ringraum zum Heizgaspfad abgedichtet. Beispielsweise erfolgt die Abdichtung mittels eines Dichtringes, der in eine durch zwei Radialstege gebildete Umfangsnut des Turbinenzwischengehäuses eingesetzt ist.

Aufgabe der Erfindung ist es, eine Strömungsmaschine mit einer alternativen Abdichtung eines von einem Turbinenzwischengehäuse und einem Niederdruckturbinengehäuseabschnitt gebildeten Ringraums zu schaffen.

Diese Aufgabe wird gelöst durch eine Strömungsmaschine mit den Merkmalen des Patentanspruchs 1.

Eine erfindungsgemäße Strömungsmaschine mit einem Turbinenzwischengehäuse zum Führen eines Heißgasstroms von einer Hochdruckturbine zu einer Niederdruckturbine, das mit einem Niederdruckturbinengehäuseabschnitt einen Ringraum begrenzt, hat erfindungsgemäß zum Verhindern eines Kühllufteinzugs aus dem Ringraum in den Heißgaspfad einen in eine Umfangsnut eingesetzten radial inneren Dichtring, der sich in Anlage mit dem Turbinenzwischengehäuse befindet, und einen in die Umfangsnut eingesetzten radial äußeren Dichtring, der sich in Anlage mit dem Niederdruckturbinengehäuseabschnitt befindet und eine Ringüberlappung mit dem radial inneren Dichtring bildet.

Mittels einer derartigen Abdichtung lässt sich ein Kühllufteinzug aus dem Ringraum in den Heißgaspfad wirkungsvoll verhindern. Die Abdichtung weist einen radial inneren Dichtbereich, einen radial mittleren Dichtbereich und einen radial äußeren Dichtbereich auf, wobei der innere Dichtbereich und der äußere Dichtbereich jeweils von einem der Dichtringe und der radial mittlere Dichtbereich von beiden Dichtringen gebildet wird. Hierdurch weisen die Dichtringe nur jeweils eine umfangsseitige Dichtfläche auf, was die geometrische Einstellung der Dichtringe wesentlich zu einem herkömmlichen Dichtring mit zwei zueinander entgegengesetzten umfangsseitigen Dichtflächen vereinfacht. Zudem erlaubt die Ringüberlappung Verschiebungen der Dichtringe in Radialrichtung der Strömungsmaschine relativ zueinander, so dass bei unterschiedlichen thermischen Ausdehnungen des Turbinenzwischengehäuses und des Niederdruckgehäuseabschnitts eine verlässliche Abdichtung erzielt wird. Ferner wird die Montage vereinfacht, da mittels dieser relativen radialen Verschiebbarkeit der Dichtringe zueinander Montagetoleranzen ausgeglichen werden können.

Bevorzugterweise ist die Umfangsnut durch zwei sich radial vom Turbinenzwischengehäuse nach außen erstreckende Nutwände ausgebildet. Hierdurch lässt sich das Turbinenzwischengehäuse im Bereich der Umfangsnut dünwandig ausführen, da sich die Nutwände stabilisierend auf das Turbinenzwischengehäuse auswirken.

Zur Reduzierung von thermischen Spannungen Turbinenzwischengehäuse im Bereich der Umfangsnut ist es vorteilhaft, wenn zumindest die heißgaspfadnahe Nutwand in Umfangsrichtung verteilt eine Vielzahl von in Axialrichtung der Strömungsmaschine geöffneten radialen Vertiefungen aufweist. Vorteilhafterweise ist ebenfalls die heißgaspfadferne Nutwand mit Vertiefungen versehen, so dass auch im Bereich der heißgaspfadfernen Nutwand thermische Spannungen reduziert werden. Zudem wird durch die Vertiefungen die Masse des Turbinenzwischengehäuses reduziert.

Bei einem Ausführungsbeispiel haben die Vertiefungen in der heißgaspfadnahen Nutwand jeweils einen Boden, der radial innen zum Nutgrund der Umfangsnut angeordnet ist. Hierdurch lassen sich die thermischen Spannungen weiter reduzieren, da das Turbinenzwischengehäuse so im Bereich der heißgaspfadnahen Nutwand sehr dünnwandig ausgeführt ist.

Bevorzugterweise ist die heißgaspfadferne Nutwand mit axial geöffneten radialen Vertiefungen versehen, deren Böden radial außen zum Nutgrund positioniert sind. Hierdurch wirkt die heißgaspfadferne Nutwandung auch im nutgrundnahen Bereich der Vertiefungen als Barriere für den Kühllftstrom, so dass der Kühlluftstrom vor dem Nutgrund umgeleitet wird und nicht ungehindert auf den radial inneren Dichtbereich geführt wird, was diesen entlastet.

Um die Einleitung von mechanischen Spannungen in die Nutwände durch die Vertiefungen zu verhindern, ist es vorteilhaft, wenn die Nutwände in Umfangsrichtung wellenartig ausgebildet sind.

Zur axialen Lagefixierung der Dichtringe können diese mittels eines Federelements gegen die heißgaspfadnahe Nutwand gedrückt sein. Hierdurch wird bereits bei einem geringen Druckgefälle eine hohe Dichtheit erreicht.

Bevorzugterweise ist der radial innere Dichtring stromab des radial äußeren Dichtring angeordnet. Hierdurch ist der radial innere Dichtring sicher in der Umfangsnut angeordnet bzw. im Betrieb zwischen dem radial äußeren Dichtring und der heißgaspfadnahen Nutwand eingespannt. Alternativ kann der radial äußere Dichtring stromauf des radial inneren Dichtrings angeordnet sein.

Sonstige vorteilhafte Ausführungsbeispiele sind Gegenstand weiterer Unteransprüche.

Im Folgenden wird ein bevorzugtes Ausführungsbeispiel der Erfindung anhand schematischer Darstellungen näher erläutert. Es zeigen:
- Figur 1: einen Längsschnitt durch eine erfindungsgemäße Strömungsmaschine im Bereich eines Turbinenzwischengehäuses, und
- Figur 2: einen Rückansicht der Strömungsmaschine.

Im Folgenden beziehen sich Begriffe axial und radial auf eine Axialrichtung und eine Radialrichtung der Strömungsmaschine.

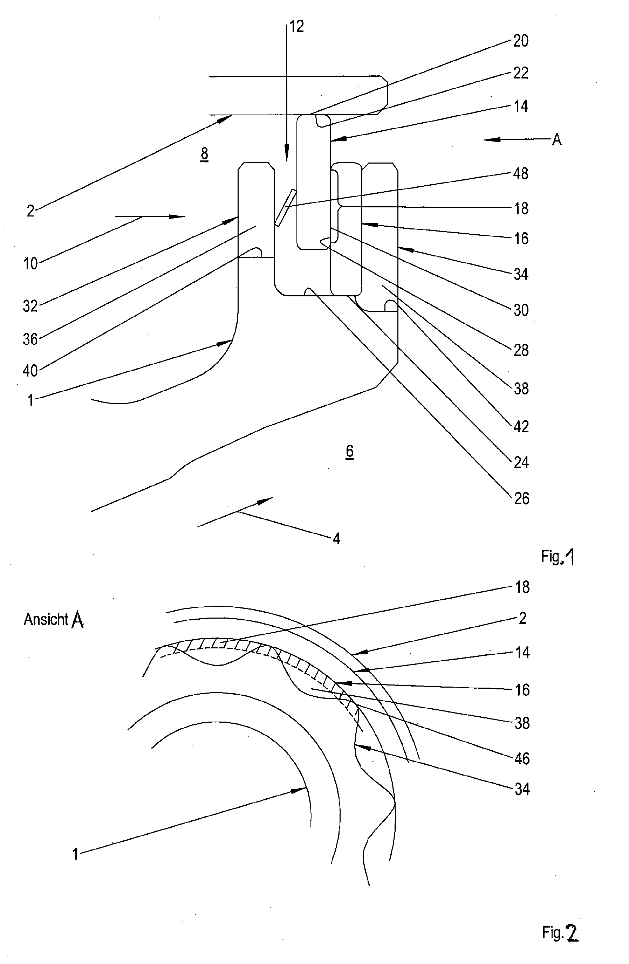

In Figur 1 ist ein Abschnitt eines Turbinenzwischengehäuses 1 und eines Niederruckturbinengehäuses 2 einer Strömungsmaschine wie ein Flugtriebwerk oder eine stationäre Gasturbine gezeigt. Das Turbinenzwischengehäuse 1 dient zum Führen eines Heißgasstroms 4 durch einen Heißgaspfad 6 von einer Hochdruckturbine zu einer Niederdruckturbine und bildet mit einem Endabschnitt des stromaufwärtigen Niederdruckturbinengehäuses 2 einen Ringraum 8. Der Ringraum 8 ist mit einem maschinenseitigem Kühlluftsystem verbunden, wobei zur Verhinderung eines Einzugs eines Kühlluftstroms 10 in den Heißgaspfad 6 in einer Umfangsnut 12 des Turbinenzwischengehäuses 1 ein radial äußerer Dichtring 14 und ein radial innerer Dichtring 16 angeordnet sind, die eine radiale Ringüberlappung 18 bilden.

Der radial äußere Dichtring 14 dient zur Bildung eines radial äußeren Dichtbereichs und in Kombination mit dem radial inneren Dichtring 16 zur Bildung eines radial mittleren Dichtbereichs. Dabei wird im radial äußeren Dichtbereich eine axiale Kühlluftströmung und im radial mittleren Dichtbereich eine radiale Kühlluftströmung aus dem Ringraum 8 in den Heißgaspfad 6 verhindert. Der radial äußere Dichtring 14 ist ein in Radialrichtung geschlitzter Federring, der mit seiner Außenumfangsfläche 20 dichtend an einer der Umfangsnut 12 gegenüberliegenden Innenumfangsfläche 22 des Niederdruckturbinengehäuses 2 bzw. dessen Endabschnitt anliegt. Im entspannten und somit im nicht in der Umfangsnut 18 montierten Zustand hat der radial äußere Dichtring 14 einen Außendurchmesser, der größer als ein Innendurchmesser des Niederdruckturbinengehäuses 2 im Bereich der Innenumfangsfläche 22 ist.

Der radial innere Dichtring 16 dient zur Bildung eines radial inneren Dichtbereichs und in Kombination mit dem radial äußeren Dichtring 14 zur Bildung des radial mittleren Dichtbereichs. Im radial inneren Dichtbereich wird wie im radial äußeren Dichtbereich eine axiale Kühlluftströmung aus dem Ringraum 8 in den Heißgaspfad 6 verhindert. Der radial innere Dichtring 16 ist ebenfalls ein in Radialrichtung geschlitzter Federring, der jedoch mit seiner Innenumfangsfläche 24 dichtend am Nutgrund 26 der Umfangsnut 12 anliegt. Im entspannten und somit im nicht in der Umfangsnut 18 montierten Zustand hat der radial innere Dichtring 16 einen Innendurchmesser, der kleiner als ein Außendurchmesser des Turbinenzwischengehäuses 1 im Bereich des Nutgrundes 26 ist.

In Radialrichtung betrachtet ist der radial äußere Dichtring 14 vom Nutgrund 26 und der radial innere Dichtring von der Innenumfangsfläche 22 des Niederdruckturbinengehäuses 2 beabstandet.

Die Ringüberlappung 18 definiert den radial mittleren Dichtbereich. Er wird von einer ebenen hinteren Dichtringfläche 28 des radial äußeren Dichtrings 14 und einer sich mit dieser im dichtenden Kontakt befindenden ebenen vorderen Dichtringfläche 30 des radial inneren Dichtrings 16 gebildet.

Die Umfangsnut 12 hat eine sich in radialer Richtung erstreckende heißgaspfadferne bzw. in Axialrichtung betrachtet vordere Nutwandung 32 und eine sich in radialer Richtung erstreckende heißgaspfadnahe hintere Nutwandung 34. Die Nutwandungen 32, 34 sind jeweils mit einer Vielzahl von gleichmäßig über ihren Umfang verteilten Vertiefungen 36, 38 versehen. In dem gezeigten Ausführungsbeispiel sind die vorderen Vertiefungen 36 und die hinteren Vertiefungen 38 an gleichen Umfangspositionen angeordnet. Allerdings können die Vertiefungen 36, 38 in Umfangsrichtung auch versetzt zueinander positioniert sein.

Die Vertiefungen 36, 38 durchsetzen die Nutwände 32, 34 in axialer Richtung und öffnen somit die Umfangsnut 12 abschnittsweise in Strömungsrichtung des Kühlluftstroms 4. Die Nutwände 32, 34 beginnen an der gleichen radialen äußeren Position, jedoch sind die Vertiefungen 36, 38 unterschiedlich tief ausgebildet. So sind in dem hier gezeigten Ausführungsbeispiel Böden 40 der vorderen Vertiefungen 36 radial außen zum Nutgrund 26 und Böden 42 der hinteren Vertiefungen 38 radial innen zum Nutgrund 26 angeordnet. Die hinteren Vertiefungen 38 sind somit tiefer als die vorderen Vertiefungen 36 ausgebildet.

Wie beispielsweise an der hinteren Nutwand 34 in Figur 2 gezeigt, sind die Nutwände 32, 34 vorzugsweise wellenartig ausgebildet. Insbesondere sind in dem gezeigten Ausführungsbeispiel die Vertiefungen 36, 38 bogenförmige Aushöhlungen. Bevorzugterweise haben sich zwischen den Vertiefungen 36, 38 erhebende Nutwandabschnitte 44 einen abgerundeten Kopfbereich 46. Die in der Ansicht A nicht sichtbare Ringüberlappung 18 ist schraffiert dargestellt.

Wie in Figur 1 gezeigt, haben die aneinander anliegenden Dichtringe 14,16 eine geringere axiale Erstreckung als der Nutgrund 26. Somit sind die Dichtringe 14, 16 grundsätzlich in axialer Richtung verschiebbar in der Umfangsnut 12 eingesetzt. In radialer Richtung ist der radial äußere Dichtring 14 durch seine radial nach außen wirkende Vorspannung an der Innenumfangsfläche 22 lagefixiert. Der radial innere Dichtring 16 ist durch seine radial nach innen wirkende Vorspannung an dem Nutgrund 26 lagefixiert. Der radial äußere Dichtbereich und der radial innere Dichtbereich sind somit bereits im Stillstand der Strömungsmaschine gebildet bzw. geschlossen. Im Betrieb der Strömungsmaschine besteht zwischen dem Heißgaspfad 6 und dem Ringraum 8 ein Druckunterschied, wobei im Heißgaspfad 6 ein niedrigerer Druck als im Ringraum 8 herrscht. Durch das hierdurch gemäß der Darstellungen in Figur 1 von links nach rechts wirkende Druckgefälle werden die Dichtringe 14, 16 nach rechts bewegt. Dabei wird der radial innere Dichtring 16 zwischen der hinteren Nutwand 34 und dem radial äußeren Dichtring 14 eingeklemmt. Es bildet sich die Ringüberlappung 18 aus, wodurch der Ringraum 8 auch im mittleren Dichtbereich geschlossen ist. Ein Kühllufteinzug aus dem Ringraum 8 in den Heißgaspfad 6 wird wirkungsvoll verhindert. Die Orientierung der Dichtringe 14, 16 in Umfangsrichtung ist bevorzugterweise derart, dass sie mit ihren Trennschlitzen außerhalb der Vertiefungen 36, 38 und somit im Bereich Nutwandabschnitten 44 liegen.

Um bereits bei einem geringen Druckgefälle eine hohe Dichtheit zu erreichen, können die Dichtringe 14, 16 durch ein ringförmiges Federelement 48 in Richtung des Druckgefälles, also in Figur 1 von links nach rechts, mit einer Spannkraft beaufschlagt werden. Das Federelement 48 stützt sich an der vorderen Nutwand 32 ab und greift an dem radial äußeren Dichtring 14 an, wodurch dieses aufgrund der Spannkraft des Federelementes 48 gegen den radial inneren Dichtring 16 und dieser gegen die hintere Nutwandung 34 gedrückt wird. Zudem wird durch das Federelement 48 ein versehentliches und im höchsten Maße unwahrscheinliches Wegkippen des radial äußeren Dichtrings 14 aufgrund des Druckgefälles verhindert, wodurch die flächige Anlage zwischen seiner Außenumfangsfläche 20 und der Innenumfangsfläche 22 des Niederdruckturbinengehäuses 2 aufgehoben und sich stattdessen eine Linienanlage einstellen würde.

Bevorzugterweise haben die Dichtringe 14, 16 eine gleiche Erstreckung in radialer Richtung und in axialer Richtung. Insbesondere ist die Höhe des radial inneren Dichtringes 16 gleich einer axialen Erstreckung der hinteren Nutwand 34 von dem Nutgrund 16 in Richtung des Niederdruckturbinengehäuses 6 bzw. der Nutwandabschnitte 44.

Offenbart ist eine Strömungsmaschine mit einem Turbinenzwischengehäuse, wobei ein zwischen dem Turbinenzwischengehäuse und einem Niederdruckturbinengehäuse gebildeter Ringraum mittels zumindest zwei Dichtringen abgedichtet ist, wobei sich der eine Dichtring in Anlage mit dem Turbinenzwischengehäuse befindet und sich der andere Dichtring in Anlage mit dem Niederdruckturbinengehäuse befindet und dabei eine radiale Ringüberlappung mit dem erstgenannten Dichtring bildet.

### Bezugszeichenliste

| | |
|---|---|
| 1 | Turbinenzwischengehäuse |
| 2 | Niederdruckturbinengehäuse |
| 4 | Heißgasstrom |
| 6 | Heißgaspfad |
| 8 | Ringraum |
| 10 | Kühlluftstrom |
| 12 | Umfangsnut |
| 14 | radial äußerer Dichtring |
| 16 | radial innerer Dichtring |
| 18 | Ringüberlappung |
| 20 | Außenumfangsfläche |
| 22 | Innenumfangsfläche |
| 24 | Innenumfangsfläche |
| 26 | Nutgrund |
| 28 | hintere Dichtringfläche |
| 30 | vordere Dichtringfläche |
| 32 | vordere Nutwand |
| 34 | hintere Nutwand |
| 36 | vordere Vertiefung |
| 38 | hintere Vertiefung |
| 40 | vorderer Boden |
| 42 | hinterer Boden |
| 44 | Nutwandabschnitt |
| 46 | Kopfbereich |
| 48 | Federelement |

## Patentansprüche

1. Strömungsmaschine mit einem Turbinenzwischengehäuse (1) zum Führen eines Heißgasstroms (4) von einer Hochdruckturbine zu einer Niederdruckturbine, das mit einem Abschnitt eines Niederdruckturbinengehäuses (2) einen Ringraum (8) begrenzt, **dadurch gekennzeichnet, dass** zum Verhindern eines Kühllufteinzugs aus dem Ringraum (8) in einen Heißgaspfad (6) in einer Umfangsnut (12) ein radial innerer Dichtring (16), der sich in Anlage mit dem Turbinenzwischengehäuse (1) befindet, und ein radial äußerer Dichtring (14), der sich in Anlage mit dem Abschnitt des Niederdruckturbinengehäuses (2) befindet und eine Ringüberlappung (18) mit dem radial inneren Dichtring (16) bildet, angeordnet sind.

2. Strömungsmaschine nach Anspruch 1, wobei die Umfangsnut (12) durch zwei sich radial vom Turbinenzwischengehäuse (1) nach außen erstreckende Nutwände (32, 34) ausgebildet ist.

3. Strömungsmaschine nach Anspruch 2, wobei zumindest die heißgaspfadnahe Nutwand (34) eine Vielzahl von axial geöffneten radialen Vertiefungen (38) aufweist.

4. Strömungsmaschine nach Anspruch 3, wobei die Vertiefungen (38) in der heißgaspfadnahen Nutwand (34) jeweils einen Boden (42) haben, der radial innen zum Nutgrund (26) der Umfangsnut (12) angeordnet ist.

5. Strömungsmaschine nach Anspruch 3 oder 4, wobei Böden (40) der Vertiefungen (36) in der heißgaspfadfernen Nutwand (32) radial außen zum Nutgrund (26) angeordnet sind.

6. Strömungsmaschine nach einem der Ansprüche 2 bis 5, wobei die Nutwände (32, 34) in Umfangsrichtung wellenartig ausgebildet sind.

7. Strömungsmaschine nach einem der vorhergehenden Ansprüche, wobei die Dichtringe (14, 16) mittels eines Federelements (48) gegen die heißgaspfadnahe Nutwand (34) gedrückt sind.

8. Strömungsmaschine nach einem der vorhergehenden Ansprüche, wobei der radial innere Dichtring (16) hinter dem radial äußeren Dichtungsring (14) angeordnet ist.
